# FASCICULE DE BREVET EUROPEEN

(11) **EP 0 468 850 B1**
(45) Date de publication et mention de la délivrance du brevet: **10.02.1993**
(21) Numéro de dépôt: 91401964.1
(22) Date de dépôt: 15.07.1991
(51) Int. Cl.: B60S 1/34

(54) **Capuchon encliquetable de bras porte-balai d'essuie-glace**
Einrastbare Abdeckkappe für Scheibenwischerblatttragarm
Snap cap for windshield wiper blade support arm

(30) Priorité: 25.07.1990 FR 9009489
(43) Date de publication de la demande: 29.01.1992
(73) Titulaire: VALEO SYSTEMES D'ESSUYAGE, 78180 Montigny-Le-Bretonneux (FR)
(72) Inventeur: Schon, Wilfrid, F-63500 St. Etienne/Usson (FR)
(74) Mandataire: Gamonal, Didier

(56) Documents cités:
- FR-A- 2 195 957
- FR-A- 2 200 815
- FR-A- 2 462 311

## Description

La présente invention se rapporte aux essuie-glaces pour véhicules automobiles et plus particulièrement à un capuchon encliquetable sur un bras porte-balai caréné.

On sait que, pour l'essuyage des surfaces vitrées soumises à aspersion, on utilise, afin de maintenir une bonne visibilité à travers lesdites surfaces vitrées, des essuie-glaces à mouvement alternatif qui frottent sur les surfaces à balayer au moyen d'un balai d'essuie-glace. Ledit balai d'essuie-glace est généralement entraîné par un bras d'essuie-glace qui lui-même est mécaniquement solidaire d'un moyen d'entraînement généralement constitué par un motoréducteur qui communique audit bras un mouvement de rotation alternatif.

A cet effet, on monte sur l'arbre de sortie du motoréducteur une tête d'entraînement qui est elle-même reliée au bras qui porte l'armature du balai d'essuie-glace.

Le bras d'essuie-glace peut être appelé à être remplacé par suite d'une usure ou d'une intervention mécanique.

A cet effet, on monte généralement la tête d'entraînement sur l'arbre de sortie au moyen d'une liaison démontable telle qu'un écrou qui peut être dévissé pour permettre de dégager le bras d'essuie-glace de l'arbre de sortie.

Dans un souci d'esthétique, il est nécessaire que le montage du bras soit masqué. De plus, il est souhaitable de protéger ce montage contre les agressions extérieures, telles que les intempéries.

Pour obtenir ce résultat, il est déjà connu de recouvrir l'écrou par un capuchon amovible qui doit être lié de préférence de manière imperdable au carter du bras, c'est-à-dire que le capuchon doit pouvoir être dégagé de l'endroit de la liaison entre le bras et l'arbre de sortie pour permettre le changement éventuel du bras d'essuie-glace.

Il a déjà été proposé d'après FR-A-2 462 311 de réunir le capuchon au carter par l'intermédiaire de tourillons, portés par le capuchon, et s'insérant dans des rainures prévues dans le carter de manière à ce que ledit capuchon puisse d'une part pivoter autour des tourillons et d'autre part être déplacé par coulissement le long des rainures du carter.

Ainsi, dans un premier temps le capuchon qui entoure initialement la tête d'entraînement peut pivoter puis être dégagé vers l'arrière c'est-à-dire vers le balai d'essuyage de sorte que l'accès à l'écrou de fixation de la tête d'entraînement sur l'arbre de sortie devienne possible.

Il est apparu que les tourillons étaient assez fragiles de sorte qu'ils pouvaient se briser à la suite d'une mauvaise manoeuvre et entraîner le changement complet du bras.

Par ailleurs, le coût de fabrication d'un tel ensemble est relativement élevé compte tenu de ce qu'il est nécessaire de former des glissières dans le carter qui est habituellement en tôle d'acier.

La présente invention a pour objet de pallier des inconvénients des dispositifs de capuchon de protection connus de FR-A-2 462 311, et de permettre la réalisation d'un capuchon encliquetable de structure particulièrement simple pouvant être verrouillé sur le carter.

Selon la présente invention, le bras d'essuie-glace portant un capuchon de protection pour la tête d'entraînement dudit bras relié à ladite tête par l'intermédiaire d'un carter, ledit capuchon comprenant un corps creux se prolongeant par au moins une patte de liaison au carter permettant le coulissement du capuchon par rapport au carter, le capuchon étant est relié au carter par deux pattes de fixation (bras du type divulgué par FR-A-2 462 311, caractérisé en ce que chacune des pattes de fixation présente une glissière longitudinale, à l'intérieur desquelles peut venir s'insérer un pion.

Différents modes de réalisation sont indiqués dans les revendications dépendantes.

D'autres caractéristiques et avantages de l'invention apparaîtront au cours de la description qui va suivre d'un mode particulier de réalisation de l'invention, donné uniquement à titre d'exemple non limitatif en regard des figures qui représentent :
- La figure 1, un capuchon en position d'emmanchement sur le carénage ;
- La figure 2, une vue en coupe d'un même capuchon immédiatement avant son encliquetage ;
- La figure 3, une vue du capuchon en position sur l'extrémité supérieure de l'arbre de sortie.

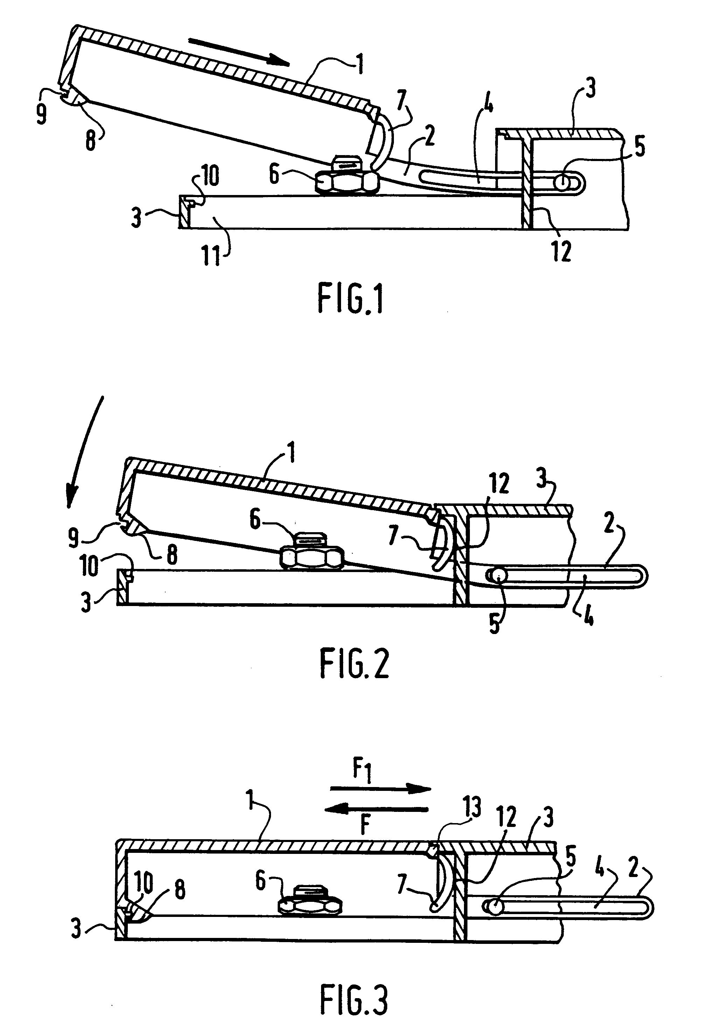

La figure 1 représente le montage du capuchon en coupe verticale. Sur la figure 1, on voit que le capuchon 1 se compose d'un corps creux à la partie inférieure duquel s'étend deux pattes 2 dont une seule apparaît sur la figure 1 en raison de la coupe.

La patte 2 pénètre à l'intérieur du carter ou carénage désigné d'une manière générale par la référence 3. Chacune des pattes 2 présente une glissière ou lumière de guidage 4 à l'intérieur de laquelle vient s'insérer un pion ou picot 5 faisant saillie sur la surface interne du carter 3.

Le carter est avantageusement réalisé par moulage d'une matière plastique, de même que le capuchon. La forme incurvée de la patte 2 permet au capuchon de pivoter par rapport aux pions 5 de manière à dégager par pivotement la partie supérieure de l'écrou 6 qui relie la tête d'entraînement à l'arbre de sortie (non représentés).

Le corps 1 du capuchon présente également du côté du carter un moyen élastique formé par une languette élastique incurvée 7 qui fait saillie hors du corps à travers une découpe 4 du capuchon.

A l'opposé de la patte 7 est formé dans un rebord 8 dudit capuchon, un crochet 9.

Ce crochet 9 peut venir s'encliqueter sur un talon 10 prévu dans le carénage 3, à l'intérieur d'une cavité 11 permettant de recevoir l'arbre de sortie, la tête d'entraînement et l'écrou 6. Les moyens d'encliquetage consistent ainsi en un crochet 9 constituant une rainure, conformée dans le rebord 8 du corps 1, et s'appliquant autour du talon 10, la languette 7 exerçant une pression latérale de verrouillage sur le crochet 9 par l'intermédiaire du corps 1.

Comme cela apparaît sur la figure 2, le montage du capuchon sur la tête consiste dans un premier temps à faire coulisser les pattes 2 sur les pions 5. Ainsi, le corps 1 du capuchon se rapproche à la fois du carter 3 et de l'écrou 6.

La languette élastique 7 vient alors en butée contre une paroi verticale 12 du carter où elle s'écrase légèrement.

Comme cela est représenté sur les figures, la languette 7 est incurvée de manière à glisser contre la paroi 12.

Lorsque le mouvement du pivotement se poursuit (Fig.3), le rebord 8 passe au dessus du talon 10 de sorte que le crochet 9 vient s'encliqueter autour du talon 10. A ce moment, la languette 7 exerce une poussée de la gauche droite vers la gauche de la figure symbolisée par la flèche F de sorte que le crochet 9 soit appliqué latéralement contre le talon 10 ce qui constitue un verrouillage.

Ainsi, le capuchon 1, monté comme il vient d'être indiqué ne peut pas s'ouvrir accidentellement et forme un ensemble compact avec le carter 3. La position du capuchon en position de fermeture est représentée sur la figure 3.

Par contre, lorsque l'on veut avoir accès à l'écrou 6, une poussée dans le sens de la flèche F1 permet de dégager le crochet 9 du talon 10, puis de faire pivoter le corps 1 du capuchon autour de l'axe 13 et enfin de faire coulisser les glissières 4 sur les pions 5 de manière à obtenir la position représentée sur la figure 1, le corps du capuchon 1 pouvant être tourné d'un angle de sensiblement 90° grâce à la rotation des pattes 2 autour des pions 5 de manière à dégager complètement l'accès à l'écrou 6.

Il va de soi que de nombreuses variantes peuvent être introduites, notamment par substitution de moyens techniquement équivalents sans pour autant sortir du cadre de l'invention.

Ainsi, les moyens élastiques peuvent être formés par la paroi du capuchon portant les moyens de verrouillage et être constitués par une languette élastique issue de cette paroi.

## Revendications

1. Bras d'essuie-glace portant un capuchon de protection pour la tête d'entraînement dudit bras relié à ladite tête par l'intermédiaire d'un carter, ledit capuchon (1) comprenant un corps creux se prolongeant par au moins une patte de liaison (2) au carter (3), permettant le coulissement du capuchon par rapport au carter, le capuchon étant relié au carter par deux pattes de fixation (2), caractérisé en ce que chacune des pattes de fixation (2) présente une glissière longitudinale (4) à l'intérieur desquelles peut venir s'insérer un pion (5).

2. Bras d'essuie-glace selon la revendication 1, caractérisé en ce que des moyens élastiques (7) sont prévus entre le capuchon (1) et le carter (3).

3. Bras d'essuie-glace selon la revendication 1 ou 2, caractérisé en ce que des moyens d'encliquetage sont prévus entre le capuchon (1) et le carter (3).

4. Bras d'essuie-glace selon la revendication 2, caractérisé en ce que les moyens élastiques (7) sont constitués par une languette élastique incurvée.

5. Bras d'essuie-glace selon la revendication 4, caractérisé en ce que la languette (7) est portée par le capuchon (1).

6. Bras d'essuie-glace selon l'une des revendications 1 ou 2, caractérisé en ce que les moyens d'encliquetage consistent en un crochet (9) s'appliquant autour d'un talon (10).

7. Bras d'essuie-glace selon la revendication 6, caractérisé en ce que le crochet (9) est porté par le capuchon (1) et le talon (10) par le carter (3).

8. Bras d'essuie-glace selon l'une quelconque des revendications précédentes, caractérisé en ce que le capuchon est monté sur le carter (3) par un double mouvement de pivotement et de coulissement.

## Patentansprüche

1. Scheibenwischerarm mit Abdeckkappe für den Mitnehmerkopf des gennanten Arms, mittels eines Gehäuses mit dem gennanten Kopf verbunden, wobei die gennante Kappe (1) einen Hohlkörper enthält, der sich in wenigstens einer Verbindungsklammer (2) zum Gehäuse (3) fortsetzt, um die Gleitbewegung der Kappe im Verhältnis zum Gehäuse zu ermöglichen, wobei die Kappe mit dem Gehäuse durch zwei Befestigungsklammern (2) verbunden ist, **dadurch gekennzeichnet**, daß jede der Befestigungsklammern (2) ein Längsgleitelement (4) aufweist, in welches ein Stift (5) eingesetzt werden kann.

2. Scheibenwischerarm nach Anspruch 1, **dadurch gekennzeichnet**, daß zwischen der Kappe (1) und dem Gehäuse (3) elastische Mittel (7) vorgesehen sind.

3. Scheibenwischerarm nach Anspruch 1 oder 2, **dadurch gekennzeichnet**, daß zwischen der Kappe (1) und dem Gehäuse (3) Einrastmittel vorgesehen sind.

4. Scheibenwischerarm nach Anspruch 2, **dadurch gekennzeichnet**, daß die elastischen Mittel (7) aus einer einwärts gekrümmten elastischen Zunge bestehen.

5. Scheibenwischerarm nach Anspruch 4, **dadurch gekennzeichnet**, daß die Zunge (7) auf der Kappe (1) aufliegt.

6. Scheibenwischerarm nach einem der Ansprüche 1 oder 2, **dadurch gekennzeichnet**, daß die Einrastmittel aus einem Haken (9) bestehen, der rund um einen Absatz (10) angreift.

7. Scheibenwischerarm nach Anspruch 6, **dadurch gekennzeichnet**, daß der Haken (9) auf der Kappe (1) und der Absatz (10) auf dem Gehäuse (3) aufliegt.

8. Scheibenwischerarm nach einem der vorherigen Ansprüche, **dadurch gekennzeichnet**, daß die Kappe am Gehäuse (3) durch eine doppelte Schwenk- und Gleitbewegung angebracht ist.

## Claims

1. A screen wiper arm carrying a protective shield for the drive head of the said arm, which is connected to the said head through a shroud, the said shield (1) comprising a hollow body extended by at least one coupling arm (2), coupling it to the shroud (3) and permitting sliding movement of the shield with respect to the shroud, the shield being coupled to the shroud by means of two securing arms (2), characterised in that each of the securing arms (2) has a longitudinal slideway (4) into which a pin (5) can be inserted.

2. A screen wiper according to Claim 1, characterised in that resilient means (7) are provided between the shield (1) and the shroud (3).

3. A screen wiper according to Claim 1 or Claim 2, characterised in that snap-fit means are provided between the shield (1) and the shroud (3).

4. A screen wiper according to Claim 2, characterised in that the resilient means (7) comprise an inwardly curved resilient tongue.

5. A screen wiper according to Claim 4, characterised in that the tongue (7) is carried by the shield (1).

6. A screen wiper according to Claim 1 or Claim 2, characterised in that the snap-fit means comprise a hook (9) fitting around a bead (10).

7. A screen wiper according to Claim 6, characterised in that the hook (9) is carried by the shield (1), and the bead (10) by the shroud (3).

8. A screen wiper according to any one of the preceding Claims, characterised in that the shield is fitted on to the shroud (3) in a double pivoting and sliding movement.
